(19) Europäisches Patentamt

European Patent Office

Office européen des brevets

(11) EP 0 589 831 B1

(12) **EUROPÄISCHE PATENTSCHRIFT**

(45) Veröffentlichungstag und Bekanntmachung des Hinweises auf die Patenterteilung:
**23.10.1996 Patentblatt 1996/43**

(21) Anmeldenummer: **93810621.8**

(22) Anmeldetag: **31.08.1993**

(51) Int. Cl.[6]: **C04B 28/26**
// (C04B28/26, 7:02, 24:26, 40:06), (C04B28/26, 7:32, 24:28, 40:06)

(54) **Mörtel und Vorrichtung zur Befestigung von Verankerungsmitteln in Bohrlöchern**

Mortar and device for fixing of anchoring means in bore holes

Mortier et dispositif d'ancrage dans des puits

(84) Benannte Vertragsstaaten:
**AT BE CH DE ES FR GB IT LI NL**

(30) Priorität: **17.09.1992 DE 4231161**

(43) Veröffentlichungstag der Anmeldung:
**30.03.1994 Patentblatt 1994/13**

(73) Patentinhaber: **HILTI Aktiengesellschaft**
**9494 Schaan (LI)**

(72) Erfinder:
• **Mauthe, Peter**
**D-86842 Türkheim (DE)**
• **Hense, Ulrich, Dr.**
**D-86899 Landsberg (DE)**
• **Mönch, Monika**
**D-86899 Landsberg (DE)**

(74) Vertreter: **Wildi, Roland**
**Hilti Aktiengesellschaft**
**Patentabteilung**
**9494 Schaan (LI)**

(56) Entgegenhaltungen:
EP-A- 0 167 002          EP-A- 0 455 582
EP-A- 0 495 336          DE-A- 3 538 791
US-A- 4 126 009          US-A- 4 326 890

**Beschreibung**

Zur Befestigung von Verankerungsmitteln, wie Ankerstangen und dergleichen in Bohrlöchern haben härtbare Mörtelmassen, namentlich die bekannten sogenannten Zweikomponenten-Mörtel, erheblich an Bedeutung gewonnen. Unter Zweikomponenten-Mörteln werden Massen verstanden, die eine oder mehrere - getrennt oder in Mischung vorliegende - härtbare Komponenten einerseits und Härter andererseits enthalten. Werden die härtbaren Komponenten mit dem Härter z. B. durch Vermischen und/oder Zerstören reaktionsinhibierender Trennwände in Kontakt gebracht, härten die Massen aus. Neben den früher beherrschenden Zweikomponenten-Mörtelmassen auf anorganischer Basis konnten derartige Mörtelmassen auf organischer Basis erhebliche Marktanteile gewinnen. Dabei sind den Mörtelmassen-Systemen auf anorganischer oder organischer Basis systemimmanente Vor- und Nachteile, z. B. in verarbeitungstechnischer und anwendungstechnischer Hinsicht zu eigen. Hierzu gehören insbesondere Mischungsprobleme, Topfzeiten, Härtungscharakteristik, Temperaturabhängigkeit, Korrosionsverhalten, Chemikalien- und Alterungsbeständigkeit.

Um die Vorteile der verschiedenen Systeme miteinander zu vereinen, wurde schon vorgeschlagen, nach der Befestigung der Verankerungsmittel mit einem anorganischen Mörtel die Mörtelmasse während oder nach der Härtung mit organischen Monomeren oder anderen niedrig-molekularen, härtbaren Verbindungen zu imprägnieren. Abgesehen vom Nachteil der Mehrstufigkeit dieser Verfahrensweise sind schon wegen der z. B. durch Porosität und/oder Viskosität bedingten unterschiedlichen Eindringtiefe reproduzierbare Ergebnisse nicht zu erzielen. Es wurde auch schon versucht, zur Befestigung von Verankerungsmitteln in Bohrlöchern härtbare Mörtelmassen auf der Grundlage von Gemischen von Portlandzement und ungesättigten, härtbaren Polyestern zu verwenden. Die, zur Vermeidung von Mischungsfehlern vorkonfektionierten Portland/UP-Gemische zeigten jedoch erhebliche Nachteile, z. B. eine höchst unbefriedigende Lagerbeständigkeit, abgesehen davon, daß die Festigkeit der Befestigungen sich als nur wenig alterungsbeständig erwies, mit entsprechendem Abfall der Verankerungswerte (US-PS 3 302 410).

Aufgabe der vorliegenden Erfindung ist es demnach, einehärtbare Mörtelmasse zur Befestigung von Verankerungsmitteln in Bohrlöchern zur Verfügung zu stellen, welche die Vorteile der verschiedenen Mörtelsysteme aufweist, ohne daß die Nachteile in Kauf genommen werden müßten.

Die Lösung der gestellten Aufgabe gelingt bei Zwei- oder Mehrkomponentenmörteln zur Befestigung von Verankerungsmitteln, wie Verankerungsstangen, in Bohrlöchern mit einem Gehalt an härtbaren Verbindungen aur anorganischer und organischer Grundlage und Härtern sowie gegebenenfalls Füllmitteln (Reaktiv), Lösungsmitteln, Härtungsbeschleunigern, Erstarrungsbeschleunigern, viskositätsbeeinflussenden Mitteln, Stabilisatoren und sonstigen üblichen Mörtelbestandteilen dadurch, daß als anorganische, härtbare Verbindungen hydraulisch abbindende Verbindungen und/oder anorganisch-polykondensierbare Verbindungen und als organische, härtbare Verbindungen härtbare Vinylester enthalten sind.

Es hat sich gezeigt, daß die erfindungsgemäßen Mörtelmassen, auch wenn sie die härtbaren Verbindungen völlig unterschiedlicher Stoffklassen im Gemisch enthalten, trotzdem eine außerordentlich günstige Lagerfähigkeit aufweisen, die den bekannten Mörtelmassen, die Gemische von Verbindungen unterschiedlicher Stoffklassen enthalten, zweifelsfrei überlegen sind. Bei den bekannten Zweikomponenten-Mörtelmassen auf der Grundlage von härtbaren, ungesättigten Polyestern und Portlandzement konnte die Herstellung des Gemisches wegen der geringen Lagerfähigkeit nur unmittelbar vor der Verwendung, also am Einsatzort, erfolgen. Zusätzlich mußten dann auch noch die Härter eingemischt werden. Die Umständlichkeit dieser Vorgehensweise, die Gefahr von Mischungsfehlern bei den mehrfachen Mischvorgängen machte derartige Mörtel letzten Endes unbrauchbar.

Ein weiterer Vorteil der erfindungsgemäßen Mörtelmasse besteht unter anderem in der reduzierten Schrumpfneigung, in der erhöhten Wärmeformbeständigkeit, dem verbesserten Brandverhalten, der Resistenz gegen klimatische Bedingungen, der höheren Verbundfestigkeit, günstigerem Ausdehnungskoeffizienten (mehr zu Beton/Stahl), Langzeitverhalten, Temperaturwechselbeständigkeit. Besonders günstig ist wegen der hohen Benetzungsfähigkeit die komplikationslose Verwendbarkeit in nassen und/oder staubigen Bohrlöchern. Hervorragende Auszugswerte werden erzielt. Dabei wird in aller Regel eine besonders günstige Festigkeit und Adhäsion an der Bohrlochwandung erzielt, so daß bei der Bestimmung der Auszugswerte Versagen in aller Regel zwischen Mörtel und Ankerstange, nicht aber wie bei den bekannten Zweikomponenten-Verbundanker-Systemen zwischen Bohrlochwand, z. B. Beton, und Mörtel auftritt.

Auch bei Langzeitversuchen zeigte sich selbst bei erheblicher Chemikalienbelastung keine nachteilige Degration, wie sie z. B. von ungesättigten Polyesterharz-Portlandzement-Mörtelmassen bekannt ist. Durch die Möglichkeit, weichmacherfrei zu arbeiten, wird eine hohe Kohäsion und Adhäsion sichergestellt.

Bevorzugt werden als härtbare hydraulisch abbindende Verbindungen Zemente, insbesondere Aluminat-Zement, verwendet. Derartige Aluminat-Zemente enthalten hauptsächlich Calciumaluminatverbindungen, beispielsweise Monocalciumaluminat und/oder Bicalciumaluminat, als reaktive Verbindungen, wobei auch andere Anteile, beispielsweise Aluminiumoxid, Calciumaluminatsilikate und Ferrite möglich sind. Die analytischen $Al_2O_3$-Werte liegen häufig, wenn auch nicht notwendigerweise, über 35 %. Ganz allgemein haben sich weitgehend Eisenoxidfreie bzw. Eisenoxid-arme Zemente bewährt, d. h. Zemente, deren Eisenoxidgehalte unter etwa 10 Gew.-%, insbesondere unter 5 Gew.-% und ganz bevorzugt unter 2 oder 1 Gew.-%, liegen. So haben sich beispielsweise auch Hochofen-Zemente mit ihren geringen Eisenoxidgehalten neben oder anstelle der Aluminat-Zemente bewährt. Gips ist ein weiteres Beispiel für härtbare, hydraulisch abbindende, im Rahmen der vorliegenden Erfindung brauchbare Verbindungen. Gips/Zementmischungen sind nur möglich unter Verwendung von Zementen, die einen hohen Sulfatwiderstand aufweisen. Zu anorganischen Stoffen, die in Gegenwart von Wasser oder wäßrigen Lösungen polykondensieren, gehören vorzugsweise silikatische Stoffe, insbesondere auf der Grundlage von löslichem und/oder feinteiligem, amorphem $SiO_2$, wobei das $SiO_2$ teilweise, z. B. bis 50 Gew.-%, durch $Al_2O_3$ ersetzt sein kann. Die Stoffe können Alkalihydroxide, insbesondere NaOH und/oder KOH, Alkalisilikate, namentlich vom Wasserglas-Typ und/oder meta-Kaolinit, enthalten, wobei die Hydroxide und/oder Silikate auch als wäßrige Zubereitungen zur Härtung verwendet werden können. Stoffe dieser Art sind z. B. in EP-0 148 280 B1 beschrieben, auf die hiermit als brauchbar im Sinne der Erfindung Bezug genommen wird.

Als Vinylester haben sich insbesondere Urethanacrylate und/oder Epoxyacrylate, insbesondere in Form ihrer Methacrylate, bewährt. Bevorzugt werden Urethanacrylate verwendet, wie sie beispielsweise beschrieben sind in der deutschen Offenlegungsschrift OS 39 40 309, z. B. Vinylesterurethane auf Basis von Bisphenol-A, Novolak bzw. von Diisocyanatdiphenylmethan, Hexandiisocyanat und dergleichen Isocyanaten.

Zu Epoxyacrylate gehören vor allen Dingen Epoxyacrylate auf der Basis von Bisphenolglycidyl-Verbindungen in Form ihrer Acrylate, insbesondere in Form ihrer Methacrylate, vor allem Dimethacrylate. Besonders geeignet haben sich hiervon die Epoxymethacrylate auf Basis von Bisphenol-A z. B. mit einem Molekulargewicht von etwa 500 - 800, die Epoxymethacrylate auf Basis von Bisphenol-F z. B. mit einem Molekulargewicht von etwa 450 - 750, die Epoxymethacrylate auf der Basis von Novolak mit Molekulargewichten von z. B. von 750 - 2000, entsprechend einer Phenolkernanzahl von 3 - 8. Weiter sind beispielsweise brauchbar Trimethylolpropantrimethacrylat, 1,4-Butandioldimethacrylat, aber auch neben oder anstelle der Dimethacrylate der Bisphenolglycidyl-Verbindungen und anderer Bisphenolepoxide auch die entsprechenden (Meth)acrylate der Ethylenoxid-modifizierten Bisphenole, namentlich von Bisphenol A, F und Novolak.

Vorzugsweise macht die Summe aus den anorganischen härtbaren Verbindungen (also den härtbaren, hydraulisch abbindenden und polykondensierenden Verbindungen) und den organisch härtbaren Verbindungen (Vinylester) 30 - 99 Gew.-%, insbesondere 40 - 85 Gew.-%, bezogen auf die härterfreie Gesamtmasse, aus. Nach einer weiteren bevorzugten Ausführungsform beträgt das Gewichtsverhältnis der anorganischen, härtbaren Verbindungen zu organisch härtbaren Vinylestern 1:4 - 3:1, insbesondere 1:3 - 2:1. Dabei können die erfindungsgemäßen Mörtelmassen neben den härtbaren hydraulisch abbindenden und/oder polykondensierbaren Verbindungen und den härtbaren Vinylestern noch andere homo- oder copolymerisierbare Verbindungen, wie unoesättigte Polyester, Epoxide, zur Urethanbildung befähigte Isocyanate meist in untergeordneten Mengen enthalten. Insbesondere können Reaktivverdünner, die gleichzeitig noch eine gewisse Lösungsmittelfunktion haben, insbesondere in Mengen von 1 - 60 Gew.-%, vorzugsweise von 10 - 40 Gew.-%, bezogen auf die härterfreie Mörtelgesamtmasse, enthalten sein. Als Reaktivverdünner kommen beispielsweise Verbindungen, wie Styrol, $\alpha$-Methylstyrol, alkylierte Styrole, Divinylbenzol, niedermolekulare Maleinimide, Allylverbindungen, Acryl- und Methacrylverbindungen, wie (Meth)acrylamid, Methyl(meth)-acrylat, Ethyl(meth)acrylat, Propyl(meth)acrylat, Butyl-(meth)acrylat, Ethylhexyl(meth)acrylat, Neopentylglvkol-(meth)acrylat, Ethylenglykoldi(meth)-acrylat, Propylenglykoldi(meth)acrylat, Butandioldi(meth)-acrylat, Glycerin(meth)-acrylate, Hydroxyalkyl(meth)acrylate, alkoxylierte Bisphenol-A-di-(meth)acrylate und Glycidylmethacrylate in Betracht. Ganz bevorzugt werden, worauf hier ausdrücklich Bezug genommen wird, cycloaliphatische homo-und copolymerisierbare Verbindungen, wie sie in der DE-OS 39 40 138 beschrieben sind, verwendet. Die Reaktivverdünner sind vorzugsweise in Mengen von 5 - 90 %, insbesondere von 30 - 80 Gew.-%, bezogen auf die Gesamtmenge von Reaktivverdünner und Vinylester, enthalten.

Als Harter werden die für radikalisch polymerisierbare Verbindungen bekannten Härtungsmittel, namentlich Peroxyverbindungen, verwendet. Hierfür kommen insbesondere in Betracht: Dibenzoylperoxid, Methylethylketonperoxid, tert.-Butylperbenzoat, Cyclohexanonperoxid, Laurylperoxid und Cumolhydroperoxid. Dabei können die Peroxide weichmacherfrei eingesetzt werden, beispielsweise auch in Form wäßriger Lösungen. Wasser oder wäßrige Zubereitungen dienen als Härter und gleichzeitig als Hydratationsmittel für die härtbaren hydraulisch abbindenden bzw. als Reaktionsmedium für die polykondensierbaren Verbindungen. Die Härtungsmittel werden, soweit es Peroxide sind, in Mengen von 2 % bis 20 %, vorzugsweise von 7 % bis 13 %, bezogen auf Vinylester, Wasser als Härtungs- bzw. Hydratationsmittel für die hydraulisch abbindenden Verbindungen in Mengen von 10 % bis 80 %, vorzugsweise von 30 % bis 50 %, bezogen auf die vorliegenden hydraulischen Verbindungen, eingesetzt. Dabei kann durch die Wassermenge auch die Viskosität der Mörtelmasse beeinflußt werden. Als wäßrige Lösungen können organisch wäßrige, z. B. alkoholischwäßrige Lösungen, Lösungen von Alkalihydroxiden, wie NaOH, KOH, gegebenenfalls mit (auch dispergiertem) SiO2 bzw. von Alkaliwasserglas, insbesondere zur Härtung polykondensierbarer Stoffe, verwendet werden. Anstelle solcher Lösungen eignen sich auch Dispersionen.

Unabhängig davon können Verdicker, Verflüssiger, Thixotropiermittel enthalten sein, wie gefällte oder pyrogene Kieselsäure, Bentonite, Cellulosen, Kaolin und dergleichen, an sich bekannte Zusätze, die, sofern vorhanden, meist in Mengen von 0,1 - 8 Gew.-% vorliegen.

Zu den weiteren, gegebenenfalls vorhandenen und üblichen Mörtelbestandteilen gehören Füllmittel, wie Sand, Quarz, Glas- und Hohlglaskugeln, Korund, Kreide, Talkum, Keramik in Mengen von 0 - 60 %, vorzugsweise 10 - 50 %, bezogen auf die härtefreie Mörtelgesamtmasse.

Als Füllmittel oder Bestandteil von Füllmitteln haben sich Fasern, zB anorganische Fasern wie Glasfasern, Keramikfasern, insbesondere lehnige Fasern wie Mikroglasfasern und vor allem organische, insbesondere synthetische Fasern bewährt. Hierzu gehören zB Polyethylen- u/oder Polypropylenfasern, zB einer Länge von 50 bis 150 µm, vorzugsweise 80 bis 120 µm, wie etwa 100 µm. Schlanke Fasern oder Fasern, die durch Spleissen von entsprechenden Folien oder dickeren Fäden hergestellt sind und die Fibrillenstruktur mit Oberflächen von beispielsweise 5 bis 15 m2/g aufweisen, sind besonders geeignet. Die Fasern können als Füllmittel zB im Gemisch mit Hohlglaskugeln, Sand und dergleichen vorliegen. Besonders günstig ist es, wenn die Fasern, vorzugsweise zusammen mit den weiteren Füllmitteln, wie den vorgenannten, in der wässrigen Komponente, in der auch die radikalischen Härter anwesend sein können, enthalten sind. Die Fasern sind meist in Mengen von 0,1 bis 5 Gew.-%, vorzugsweise 0,5 bis 3 Gew.-%, bezogen auf die härtefreie Gesamtmasse, enthalten.

Der Härtungs- bzw. Erstarrungsvorgang kann außer über die Menge an Härter entscheidend beeinflußt werden durch Härtungsbeschleuniger. Hierfür können für die hydraulisch abbindende Komponente neben den üblichen Erstarrungs- bzw. Erhärtungsbeschleunigern, wie beispielsweise Alkalicarbonate, Alkalihydroxide, Aluminate, jeweils vorzugsweise in einer Menge von 0,01 - 2 Gew.-%, bezogen auf Zement, auch verflüssigende Zusätze, beispielsweise Betonverflüssiger, und Zementabmischungen, beispielsweise mit Portlandzement, bzw. Amine, wie N,N-Dimethylanilin, N,N-Diethylanilin, N,N-Diisopropyliden-p-toluidin, N,N-Dimethyl-p-toluidin, N,N-Bis (2-hydroxyethyl)-xylidin, ferner Co-, Mn-, Sn- oder Ce-Salze, wie beispielsweise Cobaltnaphthenat oder Cobaltoctoat und/oder Schwermetallsalze für den Vinylester, vorzugsweise in Mengen von 0,02 - 1,0 %, eingesetzt werden.

Gegenstand der Erfindung sind ferner Zwei- und Mehrkammervorrichtungen zur Befestigung von Verankerungsmitteln in Bohrlöchern mit härtbaren Mörtelbestandteilen und Härtern und gegebenenfalls Füllmitteln, Lösungsmitteln, Härtungsbeschleunigern und/oder weiteren üblichen Mörtelbestandteilen, wobei die härtbaren Mörtelbestandteile vom jeweiligen Härter durch reaktionshindernde Zwischenwandungen getrennt sind und wobei die Vorrichtungen einen Gehalt an hydraulisch abbindenden und/oder anorganisch polykondensierbaren Verbindungen und Vinylestern als härtbaren Mörtelbestandteilen und Peroxyverbindungen und Wasser bzw. wäßrige Zubereitungen als Härter aufweisen. Die Zwei- bzw. Mehrkammervorrichtungen können als Folienbeutel, sogenannte foil packs, ausgebildet sein und ein gemeinsames starres Bodenteil aufweisen, das seinerseits getrennte Kanäle für jeden Folienbeutel besitzt und die Kanäle in einen gemeinsamen Auspreßstutzen einmünden, mit Auspreßtülle, auf den gegebenenfalls ein rohrförmiges Mischelement als Statikmischer aufgesetzt werden kann. Die so zu einer Einheit miteinander verbundenen Folienbeutel, welche die Mörtelbestandteile enthalten, werden dann zur Befestigung des Verankerungsmittels gemeinsam in das Bohrloch unter gleichzeitigem Mischen entleert, z. B. durch gemeinsames Auspressen der Folienbeutel.

Bevorzugt enthalten die Zweikammervorrichtungen in der einen Kammer die härtbaren Bestandteile und in der anderen Kammer die Härter für die beiden härtbaren Bestandteile. Die Vorrichtungen können jedoch aber in der einen Kammer beispielsweise die härtbare hydraulisch abbindende bzw. polykondensierbare Verbindung zusammen mit dem Vinylester-Härter und in der anderen Kammer den Vinylester zusammen mit dem wäßrigen Härter für die härtbare hydraulisch abbindende bzw. polykondensierbare Verbindung enthalten. Hierbei werden häufig Lösungsvermittler benötigt. In Mehrkammervorrichtungen, insbesondere auf der Grundlage von Folienbeuteln, können die verschiedenen härtbaren Mörtelmassen voneinander und von den Härtern getrennt enthalten sein. Zu Mehrkammervorrichtungen gehören auch Systeme, bei denen Bestandteile, meist die Härter, mikroverkapselt sind. Weitere Mörtelbestandteile, wie Füllstoffe, viskositätsbeeinflussende Mittel, Beschleuniger und dergleichen, können nach Zweckmäßigkeit, wie an sich bekannt, in einer Kammer bzw. einem Beutel oder auf zwei oder mehr Kammern (Beutel) nach Stoffen und/oder in unterschiedlichen Mengen verteilt sein. Hiermit können auch die Viskositätsverhältnisse gesteuert werden, wobei lediglich darauf zu achten, ist, daß eine vorzeitige Härtungsreaktion nicht stattfindet.

Die Art der in den Zwei- oder Mehrkammervorrichtungen enthaltenen Mörtelbestandteile und Stoffe, deren chemische Zusammensetzung, die Gewichtsverhältnisse bzw. prozentualen Anteile sind im einzelnen vorangehend beschrieben und gelten in vollem Umfang auch für die Mörtelbestandteile der erfindungsgemäßen Zweikammervorrichtungen.

Soweit als Zwei- oder Mehrkammervorrichtungen Foliengebinde verwendet werden, ist darauf zu achten, daß sich Folienmaterial und Mörtelbestandteile zueinander inert verhalten. Regelmäßig sind damit Mörtelbestandteile, die als Weichmacher für die Folien des Gebindes wirken, ausgeschlossen. Das Molekulargewicht der Vinylester sollte hierbei mitberücksichtigt werden.

Bei den erfindungsgemäßen Zweikomponenten-Mörtelmassen und für die erfindungsgemäßen Zweikammervorrichtungen haben sich Mörtelmassen der nachfolgenden Gesamtzusammensetzung bewährt.

4

| Vinylester | 8 - 30 Gew.-% |
|---|---|
| Reaktivverdünner | 4 - 25 Gew.-% |
| Organisches Peroxid | 1 - 6,5 Gew.-% |
| Beschleuniger | 0,01 - 0,5 Gew.-% |
| Thixotropiermittel | 0,5 - 5,0 Gew.-% |
| Hydraulisch abbindendes bzw. polykondensierbares Material | 10 - 35 Gew.-% |
| Mineralische Füllstoffe | 20 - 55 Gew.-% |
| Wasser | 6 - 20 Gew.% |

Die Erfindung wird nachfolgend in Form von Beispielen erläutert. (Anteile in Gew.-%)

**Beispiel 1**

| Komponente A | | |
|---|---|---|
| 1. Vinylester | 25,0 | 30,0 |
| 2. Reaktivverdünner | 10,0 | 15,0 |
| 3. Zement | 25,0 | 21,0 |
| 4. Quarz 0,1 ... 0,3 mm | 40,0 | 34,0 |
| | 100,0 | 100,0 |
| **Komponente B** | | |
| 1. Wasser | 49,0 | |
| 2. Peroxid | 16,0 | |
| 3. Quarz 0,5 ... 1 mm | 35,0 | |
| | 100,0 | |
| Mischungsverhältnis härtbare organische:anorganische Mörtelverbindungen | 1:1 | 1:1,5 |

**Beispiel 2**

| Komponente A | | Komponente B | |
|---|---|---|---|
| Bisphenol-A-diglycidyldimethacrylat | 15,00 | Dibenzoylperoxid | 16,00 |
| Dicyclopentadienylmethacrylat | 15,00 | Wasser | 49,00 |
| Dimethylanilin | 0,10 | Quartz 0,5 ... 1 mm | 35,00 |
| Aluminatzement | 29,95 | | |
| Lithiumcarbonat | 0,04 | | |
| Quartz 0,1 ... 0,3 mm | 37,50 | | |
| Pyrogene Kielselsäure | 2,50 | | |
| | 100,00 | | 100,00 |
| Mischungsverhältnis: 3 Teile A : 1 Teil B | | | |

**Beispiel 3**

| Komponente A | | Komponente B | |
|---|---|---|---|
| Vinylester | 6,00 | Cumolhydroperoxid | 16,00 |
| Dicyclopentadienylmethacrylat | 20,00 | Wasser | 49,00 |
| Diethylanilin | 0,80 | Quarz 0,5 ... 1 mm | 35,00 |
| Aluminatzement | 38,00 | | |
| Lithiumcarbonat | 0,05 | | |
| Quartz 0,1 ... 0,3 mm | 30,15 | | |
| Kaolin | 5,00 | | |
| | 100,00 | | 100,00 |
| Mischungsverhältnis: 3,5 Teile A : 1 Teil B | | | |

**Beispiel 4**

| Komponente A | | | Komponente B | |
|---|---|---|---|---|
| Novolakglycidylmethacrylat | 6,00 | | Dibenzoylperoxid | 25,00 |
| Trimethylolpropantrimethacrylat | 10,00 | | Wasser | 32,40 |
| Bisphenol-A-glydicyldimethacrylat | 10,00 | | Betone | 2,50 |
| Diethylanilin | 0,60 | | Cellulose | 0,10 |
| Cobaltoctoat | 0,50 | | Quarz 0,5 ...1 mm | 40,0 |
| Aluminatzement | 27,00 | | | |
| Lithiumcarbonat | 0,03 | | | |
| Pyrogene Kieselsäure | 1,10 | | | |
| | 100,00 | | | 100,00 |
| Mischungsverhältnis: 3,7 Teile A : 1 Teil B | | | | |

**Beispiel 5**

| Komponente A | | Komponente B | |
|---|---|---|---|
| Bisphenol-A-dimethacrylat | 20,00 | Dibenzoylperoxid | 16,00 |
| 1,4-Butandioldimethacrylat | 10,00 | Wasser | 10,00 |
| Diethylanilin | 0,15 | Kaliumwasserglas (40% in $H_2O$) | 50,00 |
| Aluminatzement | 10,55 | Quarz 0,5 ... 0,8 mm | 21,00 |
| Flugasche | 19,90 | Bentone | 3,00 |
| Quarz | 37,00 | | |
| Pyrogene Kieselsäure | 2,40 | | |
| | 100,00 | | 100,00 |
| Angaben in Gewichtsprozent Mischungsverhältnis: 3 Teile A : 1 Teil B | | | |

**Beispiel 6**

| Komponente A | |
|---|---|
| 1. Vinylester | 27,00 |
| 2. Reaktivverdünner | 11,00 |
| 3. Zement | 24,00 |
| 4. Quarz 0,05 ........ 0,35 mm | 38,00 |
| | 100,00 |

| Komponente B | |
|---|---|
| 1. Wasser | 54,00 |
| 2. Dibenzoylperoxid | 13,50 |
| 3. Pyrogene Kieselsäure | 5,25 |
| 4. Hohlglaskugeln | 26,00 |
| 5. Fasern | 1,25 |
| | 100,00 |

**Patentansprüche**

1.  Zweikomponenten-Mörtel zur Befestigung von Verankerungsmitteln in Bohrlöchern mit einem Gehalt an härtbaren Verbindungen auf anorganischer und organischer Grundlage und Härtern und gegebenenfalls Füllmitteln, Lösungsmitteln, Beschleunigern und/oder weiteren Mörtelbestandteile, wobei hydraulisch abbindende und/oder polykondensierbare Verbindungen als anorganische, härtbare Verbindungen und härtbare Vinylester als organische, härtbare Verbindungen enthaltend sind.

2.  Mörtel gemäß Patentanspruch 1, **dadurch gekennzeichnet,** daß als härtbare, hydraulisch abbindende Verbindungen Zement, vorzugsweise Aluminatzement, und/oder Gips enthalten sind.

3.  Mörtel gemäß einem der vorhergehenden Patentansprüche, **dadurch gekennzeichnet,** daß als Zement eisenoxidfreie oder eisenoxidarme Zemente enthalten sind.

4.  Mörtel gemäß einem der vorhergehenden Patentansprüche, **dadurch gekennzeichnet,** daß als polykondensierbare Verbindungen silikatische, polykondensierbare Verbindungen, insbesondere lösliches, gelöstes und/oder amorphes $SiO_2$ enthaltende Stoffe enthalten sind.

5.  Mörtel gemäß einem der vorhergehenden Patentansprüche, **dadurch gekennzeichnet,** daß als härtbare Vinylester Urethanacrylate und/oder Epoxyacrylate enthalten sind.

6.  Mörtel gemäß einem der vorhergehenden Patentansprüche, **dadurch gekennzeichnet,** daß die Summe aus anorganischen härtbaren Verbindungen (hydraulisch abbindenden und polykondensierbaren Verbindungen) und härtbaren Vinylestern 30 - 99 Gew.-%, vorzugsweise 40 - 85 Gew.-%, bezogen auf die härterfreie Mörtelgesamtmasse, beträgt.

**7.** Mörtel gemäß einem der vorhergehenden Patentansprüche, **dadurch gekennzeichnet,** daß das Gewichtsverhältnis von anorganischen härtbaren Verbindungen (hydraulisch abbindenden und polykondensierbaren Verbindungen) zu härtbaren Vinylestern 1 : 4 bis 3 : 1, insbesondere 1 : 3 bis 2 : 1 beträgt.

**8.** Mörtel gemäß einem der vorhergehenden Patentansprüche, **gekennzeichnet durch** einen Gehalt an Reaktivverdünnern, vorzugsweise in einer Menge von 1 - 60 Gew.-%, insbesondere 10 - 40 Gew.-%, bezogen auf die härterfreie Mörtelgesamtmasse.

**9.** Mörtel gemäß einem der vorhergehenden Patentansprüche, **gekennzeichnet durch** Peroxyverbindungen in fester, gelöster oder dispergierter Form als Härter für die organischen Verbindungen.

**10.** Mörtel gemäß einem der vorhergehenden Patentansprüche, **gekennzeichnet durch** Wasser, wäßrige Lösungen oder wäßrige Dispersionen als Härter bzw. Hydratationsmittel für die anorganischen, hydraulisch abbindenden und/oder polykondensierbaren Verbindungen.

**11.** Mörtel gemäss einem der vorhergehenden Patentansprüche, dadurch gekennzeichnet, dass Fasern, insbesondere auf mineralischer oder organischer Basis, vorzugsweise feine Fasern einer Faserlänge von 50 - 150 μm gegebenenfalls neben Füllmitteln, enthalten sind.

**12.** Mehrkammer-Vorrichtung mit härtbaren Mörtelbestandteilen und Härtern und gegebenenfalls Füllmitteln (Reaktiv), Lösungsmitteln, Beschleunigern und/oder weiteren üblichen Mörtelbestandteilen, insbesondere gemäss einem der vorhergehenden Ansprüche zur Befestigung von Verankerungsmitteln in Bohrlochern, wobei die härtbaren Mörtelbestandteile vom jeweiligen Härter durch reaktionshindernde Zwischenwandung getrennt sind, **gekennzeichnet durch** einen Gehalt an hydraulisch abbindenden und/oder polykondensierbaren Verbindungen als anorganisehen und Vinylestern als organisehen härtbaren Mörtelbestandteilen und Peroxyverbindungen und Wasser oder wässrige Lösungen als Härter.

## Claims

**1.** Two-component mortar for fixing anchoring means in boreholes, containing inorganically or organically based hardening composites and hardeners and, if appropriate, fillers, solvents, catalysts and/or further mortar components, and with a content of hydraulically curing and/or poly-condensable composites as inorganically hardening composites and hardening vinylesters as organic hardening composites.

**2.** Mortar according to Patent Claim 1, **characterized by** the presence of cement, preferably aluminate cement, and/or gypsum as hardening hydraulically curing composites.

**3.** Mortar according to one of the above patent claims, **characterized by** the presence of a cement in the form of cements which are free of iron oxide or low in iron oxide.

**4.** Mortar according to one of the above patent claims, **characterized by** the presence of substances containing silicate poly-condensable composites, in particular soluble, dissolved and/or amorphous $SiO_2$, as poly-condensable composites.

**5.** Mortar according to one of the above patent claims, **characterized by** the presence of urethane acrylates and/or epoxy acrylates as hardening vinylesters.

**6.** Mortar according to one of the above patent claims, **characterized in that** the sum of inorganically hardening composites (hydraulically curing and poly-condensable composites) and hardening vinylesters is between 30 - 99 %-by-weight, preferably between 40 - 85 %-by-weight, relative to the hardener-free total mass of mortar.

**7.** Mortar according to one of the above patent claims, **characterized in that** the weight ratio of inorganic hardening composites (hydraulically curing and poly-condensable composites) and hardening vinylesters is between 1: 4 and 3 : 1, in particular between 1 : 3 and 2 : 1.

**8.** Mortar according to one of the above patent claims, **characterized by** a content of reactive thinners, preferably at a volume between 1 - 60 %-by-weight, in particular between 10 - 40 %-by-weight, relative to a hardener-free total mass of mortar.

9. Mortar according to one of the above patent claims, **characterized by** peroxide composites in solid, dissolved or dispersed form as hardener for the organic composites.

10. Mortar according to one of the above patent claims, **characterized by** water, aqueous solutions or aqueous dispersions as hardener or hydration means for the inorganic, hydraulically curing and/or poly-condensable composites.

11. Mortar according to one of the above patent claims, **characterized by** the presence of fibres, in particular on a mineral or organic base, preferably fine fibres of a fibre length between 50 - 150 $\mu$m, if appropriate along with filler materials.

12. Multi-chamber device with hardening mortar components and hardeners and, if appropriate, fillers (reactive), solvents, catalysts and/or additional conventional mortar components, in particular according to one of the above claims for fixing anchoring means in boreholes, and with the hardening mortar components being separated from a respective hardener by reaction-preventing intermediate wall, **characterized by** the presence of hydraulically curing and/or poly-condensable composites as inorganically, and vinylesters as organically hardening mortar components and peroxy composites and water or aqueous solutions as hardeners.

**Revendications**

1. Mortier à deux composants pour la fixation de moyens d'ancrage dans des trous, comprenant une teneur en composés durcissables à base inorganique et organique, des durcisseurs et éventuellement des charges, des solvants, des accélérateurs et/ou d'autres constituants de mortier, et dans lequel des composés à prise hydraulique et/ou polycondensables sont contenus comme composés inorganiques durcissables, et des esters vinyliques durcissables sont contenus comme composés organiques durcissables.

2. Mortier selon la revendication 1, caractérisé en ce qu'il contient comme composés durcissables à prise hydraulique, du ciment, de préférence du ciment alumineux, et/ou du plâtre.

3. Mortier selon l'une des revendications précédentes, caractérisé en ce qu'il contient comme ciment des ciments sans oxyde de fer ou à faible teneur en oxyde de fer.

4. Mortier selon l'une des revendications précédentes, caractérisé en ce qu'il contient comme composés polycondensables, des composés polycondensables aux silicates, en particulier des substances contenant du $SiO_2$ soluble, dissous et/ou amorphe.

5. Mortier selon l'une des revendications précédentes, caractérisé en ce qu'il contient comme esters vinyliques durcissables, des méthanes-acrylates et/ou des epoxy-acrylates.

6. Mortier selon l'une des revendications précédentes, caractérisé en ce que la somme des composés inorganiques durcissables (composés à prise hydraulique et polycondensables) et des esters vinyliques durcissables est de 30 à 99 % en poids, de préférence de 40 à 85 % en poids, rapportés à la masse totale du mortier sans durcisseur.

7. Mortier selon l'une des revendications précédentes, caractérisé en ce que le rapport de poids entre les composés inorganiques durcissables (composés à prise hydraulique et polycondensables) et les esters vinyliques durcissables est de 1 : 4 à 3 : 1, en particulier de 1 : 3 à 2 : 1.

8. Mortier selon l'une des revendications précédentes, caractérisé par une teneur en diluants réactifs, de préférence en une quantité de 1 à 60 % en poids, notamment de 10 à 40 % en poids, rapportés à la masse totale du mortier sans durcisseur.

9. Mortier selon l'une des revendications précédentes, caractérisé en ce qu'il contient des composés peroxydes sous une forme solide, dissoute ou dispersée comme durcisseur pour les composés organiques.

10. Mortier selon l'une des revendications précédentes, caractérisé en ce qu'il contient de l'eau, des solutions aqueuses ou des dispersions aqueuses comme durcisseur et respectivement comme agent d'hydratation pour les composés inorganiques, à prise hydraulique et/ou polycondensables.

11. Mortier selon l'une des revendications précédentes, caractérisé en ce qu'il contient éventuellement, en plus des charges, des fibres, notamment à base minérale ou organique, de préférence de fines fibres d'une longueur de fibres de 50 à 150 µm.

12. Dispositif à plusieurs chambres avec des constituants de mortier durcissables, des durcisseurs et éventuellement des charges (réactives), des solvants, des accélérateurs et/ou d'autres constituants courants de mortier, en particulier selon l'une des revendications précédentes, les constituants de mortier durcissables étant séparés du durcisseur respectif par une cloison empêchant les réactions, caractérisé qu'il contient des composés à prise hydraulique et/ou polycondensables comme composés inorganiques et des esters vinyliques comme constituants durcissables du mortier et des composés peroxydes, de l'eau ou des solutions aqueuses comme durcisseur.